# EUROPEAN PATENT APPLICATION

(11) **EP 4 557 223 A1**
(43) Date of publication of application: **21.05.2025**
(21) Application number: 24211268.8
(22) Date of filing: 06.11.2024
(51) Int. Cl.: G06T 11/00

(54) **IMAGE GENERATION APPARATUS, IMAGE GENERATION METHOD, AND IMAGE GENERATION PROGRAM**

(30) Priority: 17.11.2023 JP 2023195717
(71) Applicant: Rakuten Group, Inc., Setagaya-ku Tokyo 158-0094 (JP)
(72) Inventor: JACOB, Geethu, Tokyo, 158-0094 (JP); SAHU, Sagar, Tokyo, 158-0094 (JP); STENGER, Bjorn, Tokyo, 158-0094 (JP)
(74) Representative: Hoffmann Eitle

(57) **Abstract**

An image generation apparatus acquires text information and a prompt, the prompt being an instruction to output metadata that includes a plurality of attribute values composed of attribute values that respectively correspond to a plurality of attributes and semantically match the text information, derives metadata corresponding to the text information by inputting the text information and the prompt to a language model, generates an image based on the derived metadata.

## Description

### CROSS-REFERENCE TO RELATED APPLICATION(S)

This application claims priority to Japanese patent application No. 2023-195717, filed on November 17, 2023; the entire contents of which are incorporated herein by reference.

### TECHNICAL FIELD

The present invention relates to a technique for generating image content from text information.

### BACKGROUND ART

In recent years, with the spread of notebook PCs (personal computers), smartphones, tablet terminals, and the like, users have had more opportunities to easily use the Internet anytime anywhere. The users can use EC (electronic commerce) sites for shopping and use SNS (social network services), for example, as web services via the Internet. Companies that provide such Web services are attempting to create more attractive Web pages that can appeal to users' visual perception in order to encourage more users to frequently use their Web services.

Usually, web pages are configured by including one or more pieces of content (also referred to as "web content"), each of which is composed of a plurality of parts. Web page creators create a web page, for example, by generating one or more pieces of content and placing each piece of content at a predetermined position. As a technique for generating content on a web page, JP 2019-204184A discloses a content management apparatus that generates content by combining a plurality of parts that are selected by a user from a storage unit that stores a plurality of parts, and are disposed at any suitable positions. The apparatus makes it possible to generate content by the user selecting and combining a plurality of parts.

JP 2019-204184A is an example of related art.

### SUMMARY OF THE INVENTION

With the technique disclosed in JP 2019-204184A, content can be generated by combining desired parts selected by the user from a plurality of parts stored in the storage unit in advance. However, in a case of an operation of selecting a plurality of parts each time one piece of content is generated, the workload increases when more pieces of content are generated. In view of this, a workload per user can be reduced by allocating content generating operations to a plurality of users, but the operational efficiency may vary depending on the prior knowledge of each user.

Problems related to such operational efficiency may occur more noticeably when content to be generated is image content composed of a plurality of parts (image parts). When a large number of pieces of image content are generated, for example, parts that are selected vary depending on target image content, and thus the workload for selecting parts and generating content may increase. Furthermore, if prior knowledge about types of parts that can be selected and positions where parts can be disposed differs between a plurality of users, there may be a significant difference in the work efficiency for generating image content.

The present invention has been made in view of the above problem, and aims to provide a technique for generating image content with a simple procedure.

In order to solve the above problems, one aspect of an image generation apparatus according to the present invention includes: an acquisition unit configured to acquire text information and a prompt, the prompt being an instruction to output metadata that includes a plurality of attribute values composed of attribute values that respectively correspond to a plurality of attributes and semantically match the text information; a derivation unit configured to derive metadata corresponding to the text information by inputting the text information and the prompt to a language model; and a generation unit configured to generate an image based on the derived metadata.

In order to solve the above problems, one aspect of an image generation method according to the present invention includes: acquiring text information and a prompt, the prompt being an instruction to output metadata that includes a plurality of attribute values composed of attribute values that respectively correspond to a plurality of attributes and semantically match the text information; deriving metadata corresponding to the text information by inputting the text information and the prompt to a language model; and generating an image based on the derived metadata

In order to solve the above problems, one aspect of an image generation program according to the present invention is a program for causing a computer to execute: an acquisition procedure for acquiring text information and a prompt, the prompt being an instruction to output metadata that includes a plurality of attribute values composed of attribute values that respectively correspond to a plurality of attributes and semantically match the text information; a derivation procedure for deriving metadata corresponding to the text information by inputting the text information and the prompt to a language model; and a generation procedure for generating an image based on the derived metadata.

According to the present invention, it is possible to generate image content with a simple procedure.

A person skilled in the art will be able to understand the above-stated object, aspect, and advantages of the present invention, as well as other objects, aspects, and advantages of the present invention that are not mentioned above, from the following modes for carrying out the invention by referring to the accompanying drawings and claims.

### BRIEF DESCRIPTION OF THE DRAWINGS

FIG. 1A is a conceptual diagram showing data that is input to an image generation apparatus according to an embodiment of the present invention and data that is output in response to the input data.
FIG. 1B is a conceptual diagram of image content generation processing.
FIG. 2 shows an exemplary functional configuration of the image generation apparatus according to the embodiment.
FIG. 3 shows examples of a head part, a top part, and a bottom part.
FIG. 4 shows an example of file names and IDs given to the parts.
FIG. 5 shows an example of code of SVG files.
FIG. 6 shows an example of a screen that includes a prompt and text information.
FIG. 7 shows an example of metadata derived from input text information.
FIG. 8 shows three parts selected from the metadata derived in FIG. 7.
FIG. 9 shows an example of a procedure for combining the three parts shown in FIG. 8.
FIG. 10 shows an example of a screen in a case of modifying a generated image.
FIG. 11A shows a conceptual diagram of an image obtained by changing the colors of dominant portions of a generated image.
FIG. 11B shows a conceptual diagram of an image obtained by changing the colors of one or more partial regions of a generated image.
FIG. 12 shows a flow of processing that is executed by the image generation apparatus according to the embodiment.
FIG. 13 shows a flow of processing that is executed by an image generation apparatus according to a modified example of the embodiment.
FIG. 14 shows an exemplary hardware configuration of the image generation apparatus according to the embodiment.

### EMBODIMENTS OF THE INVENTION

Embodiments of the present invention will now be described in detail with reference to the accompanying drawings. Out of the component elements described below, elements with the same functions have been assigned the same reference numerals, and description thereof is omitted. Note that the embodiments disclosed below are mere example implementations of the present invention, and it is possible to make changes and modifications as appropriate according to the configuration and/or various conditions of the apparatus to which the present invention is to be applied. Accordingly, the present invention is not limited to the embodiments described below. The combination of features described in these embodiments may include features that are not essential when implementing the present invention.

### Overview of Operations of Image Generation Apparatus

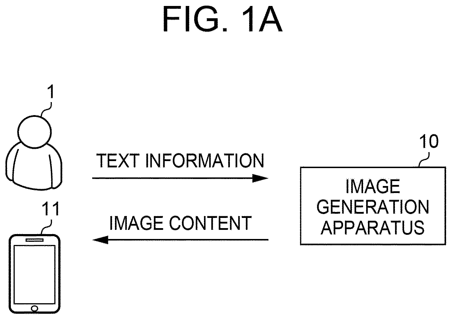

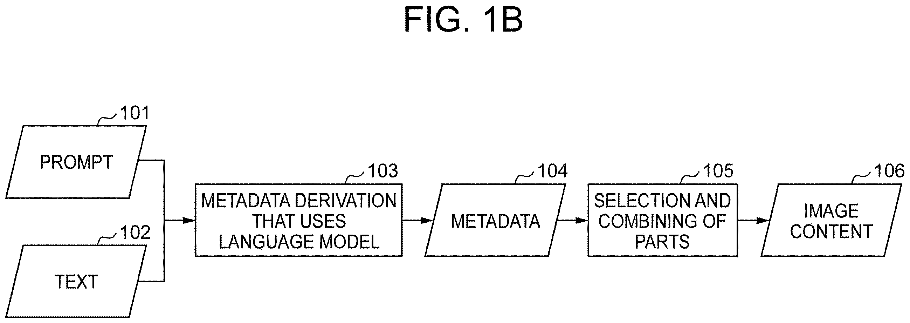

First, an overview of operations of an image generation apparatus 10 according to the present embodiment will be described with reference to FIGS. 1A and 1B. FIG. 1A is a conceptual diagram showing data that is input to the image generation apparatus 10 and data that is output in response to the input data. The image generation apparatus 10 may be constituted by a general-purpose PC (personal computer) that includes a display unit (display surface) such as a liquid crystal display and a communication unit. Note that the image generation apparatus 10 is not limited to a general-purpose PC, and may be a portable terminal such as a smartphone or a tablet PC. In addition, the image generation apparatus 10 may include the display unit separately.

A user 1 directly inputs text information (hereinafter, also simply referred to as "text") representing desired image content (hereinafter, also simply referred to as an "image") by performing an operation on the image generation apparatus 10. Alternatively, the user 1 may indirectly input text by transmitting the text to the image generation apparatus 10 by performing an operation on a user equipment (UE) 11. It suffices for text representing a desired image to be configured to express or describe at least a portion of the image. In addition, in a case where appropriate text that represents a desired image cannot be found, the user 1 may add indirect expression or figurative expression for at least a portion of the image, such as "something similar to ...", to text to be input.

The image generation apparatus 10 selects a plurality of parts that semantically match the text (i.e., description of the text) received directly from the user 1 or indirectly via the user equipment 11, and generates an image using the plurality of parts. Note that, in the present embodiment, the image generation apparatus 10 is envisioned to generate one image, but may be configured to generate a plurality of images using a plurality of selected parts. The image generation apparatus 10 outputs the generated image to the user 1 as a response to the received text. As an example of output, the image generation apparatus 10 may display the generated image on the display unit or transmit the image to the user equipment 11 via the communication unit.

The user equipment 11 is, for example, a device such as a smartphone or a tablet, and is configured to be able to communicate with the image generation apparatus 10 via wired or wireless communication. The user equipment 11 has a display unit (display surface) such as a liquid crystal display, and the user 1 can perform various operations using a GUI (Graphic User Interface) provided on the display unit. Such operations include a tap operation, a slide operation, a scroll operation, and the like that are performed by a finger, a stylus, or the like, on content such as an image displayed on the screen. The user equipment 11 may be configured to display an image generated by the image generation apparatus 10 on the display unit upon receiving the image from the image generation apparatus 10. The user equipment 11 may include the display unit separately.

In this manner, through a simple procedure for inputting text representing a desired image, the user 1 can receive an image composed of a plurality of parts that semantically match the text, from the image generation apparatus 10.

FIG. 1B shows a conceptual diagram of image content generation processing that is performed by the image generation apparatus 10. To facilitate description, FIG. 1A is referenced. As shown in FIG. 1B, the image generation apparatus 10 first acquires text 102 input by the user 1. The image generation apparatus 10 further acquires a prompt 101. The prompt 101 is an instruction instructing a language model to output metadata that semantically matches (is consistent with) the text 102, on a predetermined condition. The image generation apparatus 10 may acquire the prompt 101 input by the user 1, or may acquire the prompt 101 generated by the image generation apparatus 10 or another apparatus. The image generation apparatus 10 applies (inputs) the obtained prompt 101 and text 102 to the language model that has been trained.

Subsequently, the image generation apparatus 10 performs metadata derivation processing 103 using the language model based on the prompt 101 and the text 102. In the present embodiment, the language model is a natural language processing (NLP) model. As language models, large language models (LLMs) such as BERT (Bidirectional Encoder Representations from Transformers) and GPT series (for example, ChatGPT) are known. In the present embodiment, an example will be described in which an LLM that operates in accordance with an instruction of a prompt is used. It should be noted that another language model can also be used. The language model according to the present embodiment is configured to output (derive) metadata 104 that semantically matches the text 102, in accordance with the instruction of the prompt 101. The metadata derivation processing 103 that uses the language model will be described below in detail.

When the metadata 104 is derived, the image generation apparatus 10 performs processing 105 for selecting (sampling) and combining image parts based on the metadata 104. Specifically, the image generation apparatus 10 selects a plurality of image parts based on the metadata, and combines the selected image parts. Image content 106 is generated by combining the image parts. The processing 105 for selecting and combining image parts will be described below in detail. The image generation apparatus 10 outputs the generated image content 106 to the user 1.

The structure and operations of the image generation apparatus 10 will be described in detail below.

### Functional Configuration and Operations of Image Generation Apparatus

The image generation apparatus according to the present embodiment is configured to select, from text, a plurality of image parts that semantically match the text, and generate an image (image content) by combining the selected image parts using a language model. In the present embodiment, image parts and a generated image are images of SVG (Scalable Vector Graphics) files. Since SVG refers to an image file format for recording images in a text format that is based on XML (Extensible Markup Language) (text format for which code is written in XML), it is possible to edit images using a text editor. That is to say, an SVG image is an image that can also be edited using code (text).

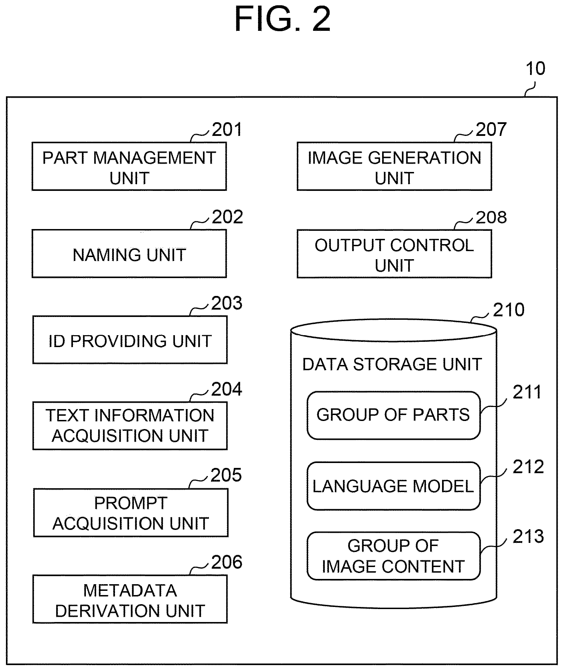

FIG. 2 shows an example of a functional configuration of the image generation apparatus 10 according to the present embodiment. The image generation apparatus 10 includes, as an example of a functional configuration thereof, a part management unit 201, a naming unit 202, an ID (identifier) providing unit 203, a text information acquisition unit 204, a prompt acquisition unit 205, a metadata derivation unit 206, an image generation unit 207, an output control unit 208, and a data storage unit 210. The data storage unit 210 is configured to be able to store a group of parts 211, a language model 212, and a group of image content 213. Note that the image generation apparatus 10 may be divided as a plurality of apparatuses instead of the entirety of the image generation apparatus 10 being provided as one apparatus. A portion of the image generation apparatus 10 may be provided in an external server apparatus. In this case, the following functions are realized through cooperation between the image generation apparatus 10 and the external server apparatus.

The part management unit 201, the naming unit 202, and the ID providing unit 203 function as a pre-processing unit that executes pre-processing. The pre-processing unit executes pre-processing that includes providing file names and IDs to a plurality of image parts (hereinafter, also simply referred to as "parts") that can constitute an image. Each file name consists of character strings (words) that respectively represent the features of a part, and each ID consists of character strings that respectively express the features of partial regions (sub-parts) of the part.

The part management unit 201 first acquires a large number of parts that can constitute image content. The large number of parts are prepared in advance and stored, for example, in the image generation apparatus 10 or a predetermined storage unit of an apparatus different from the image generation apparatus 10. In the present embodiment, an image that is generated is illustration content representing the whole human body, and each image can be generated by combining three types of parts. The three types are a head, an upper body, and a lower body. Thus, parts are classified into three types of parts. The first type is a head part representing a head, the second type is a top part representing a top (upper body portion, body portion), and the third type is a bottom part representing a bottom (lower body portion, leg portion). Although an image is generated using three parts in the present embodiment, the parts may be created and classified such that an image is generated using two parts or four or more parts.

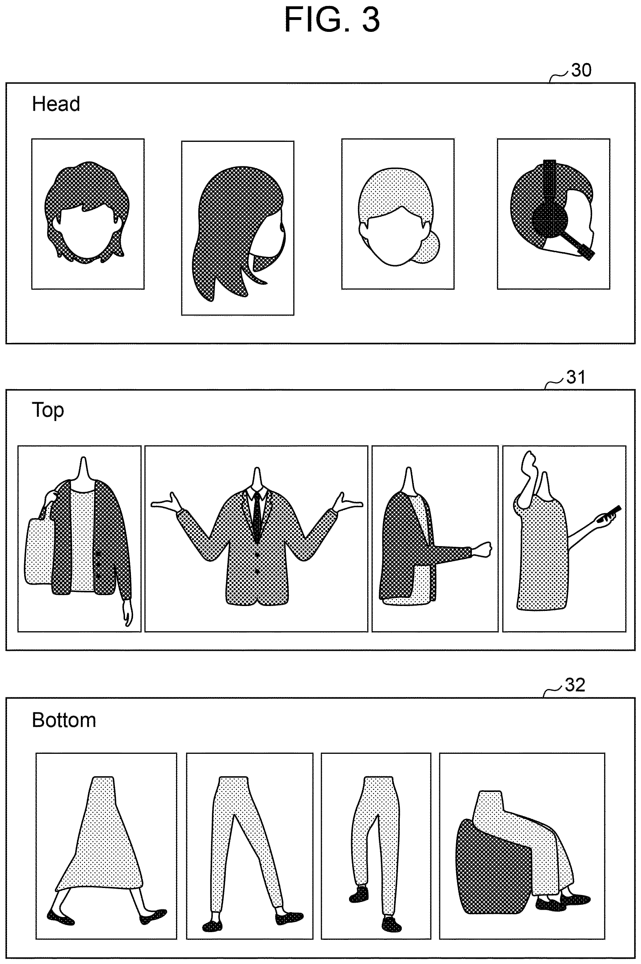

FIG. 3 shows examples of a group of head parts 30, a group of top parts 31, and a group of bottom parts 32. Note that at least a portion of each part may have a predetermined color.

The head parts in the group of head parts 30 each represents a head of a human facing forward or sideways. The head parts may include not only heads with different hairstyles (including a bald head) and different hair colors, but also a head wearing headphones. In addition, the head parts may also include a head wearing any wearable object such as glasses, a hat, hijab, a bandana, or an accessory. The head parts may also include a head wearing a hood portion of a garment that extends to the upper body portion, such as a hoodie.

Each top part in the group of top parts 31 represents an upper body portion (a region extending from the neck to the torso) facing forward or sideways. The top part represents an upper body portion wearing one or more of clothes, fabrics, and the like (hereinafter, also referred to as "upper attire") such as a shirt, a suit, a tie, a cardigan, an apron, a swimsuit, a scarf, and a stole, or an upper body portion wearing nothing. In addition, the top part may also represent an upper body portion wearing a portion other than a hood portion of a garment that extends to the head, such as a hoodie. In addition, the top part may also include an arm portion and/or a hand portion. The arm portion and/or the hand portion may include a right portion and/or a left portion, and in the case where both the left and right portions are included, the right portion and the left portion may assume different poses or postures. In addition, the arm portion and/or the hand portion may also be configured to hold an object that can be held or grasped, such as a bag or a smartphone. The hand portion may be wearing gloves, and the nail portion of the hand portion may have nail art applied thereto.

Each bottom part in the group of bottom parts 32 represents a leg portion (a region extending from the waist to the foot) facing forward or sideways. The bottom part represents a lower body portion wearing one or more of clothes, fabrics, and the like such as a skirt, trousers, and a swimsuit (hereinafter also referred to as "lower attire") or a lower body portion wearing nothing. In addition, the bottom part may also represent a state of wearing footwear such as shoes (including sneakers and pumps) or sandals. In addition, the bottom part does not have to represent a standing state. The bottom part may represent a state of sitting on a chair such as a couch or an office chair. In addition, the bottom part does not necessarily include both the right foot and the left foot, and, in the case where the bottom part includes both the left and right feet, the lengths of the right foot and the left foot do not need to be the same. In addition, the bottom part may be expressed in association with an object in a portion thereof extending from the waist to the foot. The bottom part may be configured to include a ball near the right or left foot to represent the foot kicking the ball, for example.

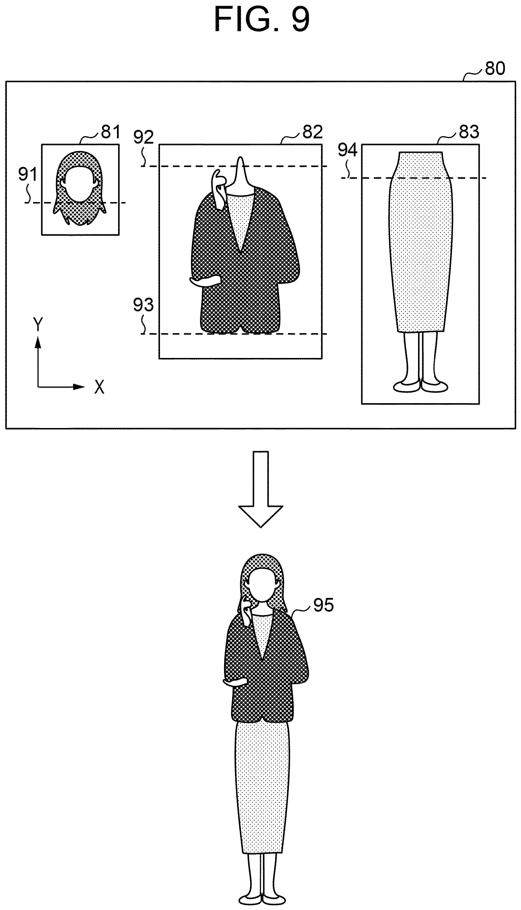

Note that the head parts do not need to have the same size. The same applies to the top parts and the bottom parts. A top part that includes an upper body portion wearing a long apron or dress may have a relatively long vertical size compared to a top part that includes an upper body portion wearing a short shirt, for example. Also, a bottom part that includes a lower body portion that is seated sideways on a chair may have a relatively long horizontal size compared to a bottom part including a lower body portion that is standing and facing forward. However, since a head part, a top part, and a bottom part are finally combined to generate one image, each part is configured such that an image that is generated when combined with the other parts is not an unnatural image. The regions of a neck portion and a face portion are configured such that, when a head part and a top part are centered and combined, the width of the neck portion of the top part does not exceed the width of the face portion of the head part, for example. In order to combine a head part, a top part, and a bottom part together, predetermined lines may be set in advance in the parts as will be described later with reference to FIG. 9.

The naming unit 202 provides a file name expressing (close to) the features of each part acquired by the part management unit 201, to the part. In the present embodiment, the file name is formed by a concatenation of a plurality of character strings that express a plurality of features included in the part. The naming unit 202 may provide a file name to a part through an input operation performed by the user 1. The user 1 views a part displayed on the display unit of the user equipment 11 or the image generation apparatus 10, visually grasps (recognizes) a plurality of features of the part, and directly or indirectly inputs character strings representing the plurality of features, to the image generation apparatus 10, for example. Then, a file name can be generated by the part management unit 201 concatenating the input character strings, and can be provided to the part. Alternatively, the naming unit 202 may provide a file name to a part in accordance with a predetermined rule using image recognition processing. The naming unit 202 extracts a plurality of features of a part by performing image recognition processing (that includes object recognition and face recognition) on the part, and obtains (generates) character strings that represent the plurality of features of the part by referencing the features against a predetermined rule, for example. The part management unit 201 can generate a file name by concatenating the character strings, and provide the file name to the part. The image recognition processing may be processing that is performed using a trained machine learning model. In addition, in a case where it is difficult to express the features of a part, such as a hairstyle (including a bald head) and the shape of a face in a head part, in an identifiable manner using character strings, the features may be identified by numbers that are based on a predetermined rule.

In the present embodiment, assume that character strings selectable as character strings expressing features of parts are determined in advance for each of the head parts, the top parts, and the bottom parts. The predetermined character strings of the head parts, the top parts, and the bottom parts are classified into a head class, a top part class, and a bottom part class, respectively. Note that the top part class is further classified into two classes, namely an upper body activity class and an upper attire class, and the bottom part class is further classified into two classes, namely a lower body activity class and a lower attire class. For each head part, a plurality of character strings are selected from the character strings included in the head class by an input operation or image recognition processing performed by the user 1. Similarly, for each top part, a plurality of character strings are selected from the character strings included in the top part class, and, for each bottom part, a plurality of character strings are selected from the character strings included in the bottom part class.

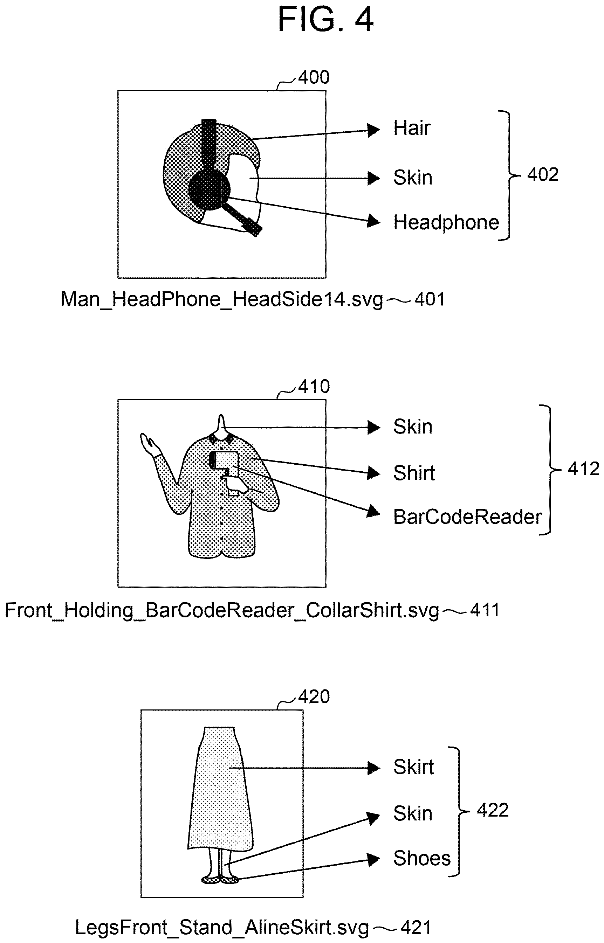

FIG. 4 shows examples of file names provided to parts. As described above, in the present embodiment, each part is configured in an SVG file, and thus the file extension thereof is "svg". FIG. 4 shows a file name 401 for a head part 400, a file name 411 for a top part 410, and a file name 421 for a bottom part 420.

In a case where the head part 400 is recognized as the head of a man who is wearing headphones and is facing sideways, such features are represented by three character strings, namely "Man", "HeadPhone", and "HeadSide14" (type 14 of side of head). The naming unit 202 can concatenate the three character strings and provide the file name 401 "Man_HeadPhone_HeadSidel4" to the head part 400.

In a case where the top part 410 is recognized as facing forward and holding a barcode reader in a hand, such features are represented by four character strings, namely "Front", "Holding", "BarCodeReader (barcode reader)", and "CollarShirt (collared shirt)". The naming unit 202 can concatenate the four character strings and provide the file name 411 "Front_Holding_BarCodeReader_BarCodeReader_CollarShirt" to the top part 410.

In a case where the bottom part 420 is recognized as standing facing forward and wearing an A-line skirt, such features are represented by three character strings, namely "LegsFront (front of legs)", "Stand (standing)", and "AlineSkirt (A-line skirt)". The naming unit 202 can concatenate the three character strings and provide the file name 421 "LegsFront_Stand_AlineSkirt" to the bottom part 420.

The file names shown in FIG. 4 are examples, and a file name different from the file name shown in FIG. 4 may be provided to the head part 400, for example. Character strings that represent the features of a part may differ when input by different users or generated by performing different image recognition processing, for example. In addition, in each of the file names shown in FIG. 4, a plurality of character strings are concatenated using underscores, but the form in which a plurality of character strings are concatenated is not limited thereto.

The ID providing unit 203 provides IDs (identifiers) respectively expressing the features of a plurality of partial regions (sub-parts) in each of the parts acquired by the part management unit 201. Each part is composed of a plurality of partial regions. Each head part included in the group of head parts 30 in FIG. 3 is composed of at least two partial regions, namely hair and skin, for example. The ID providing unit 203 provides a character string expressing the feature of each partial region, such as a name of the partial region, to the partial region as an ID. The ID providing unit 203 may provide IDs to a plurality of partial regions by the user 1 performing an input operation. The user 1, for example, views a part displayed on the display unit of the user equipment 11 or the image generation apparatus 10, visually grasps (recognizes) the features of a plurality of partial regions included in the part, and directly or indirectly inputs character strings that represent the plurality of features to the image generation apparatus 10. The ID providing unit 203 can then provide the input character strings to the part as IDs. Alternatively, the ID providing unit 203 may perform known object detection processing (image recognition processing) on a part to detect a plurality of partial regions included in the part, and generate character strings. It is possible to use object detection processing that is based on machine learning, such as the algorithm of YOLO (You Only Look Once). The ID providing unit 203 can provide the generated character strings to the part as IDs. It is possible to change a feature of filling, such as a color, in a partial region identified using an ID, in the final generated image.

Furthermore, the ID providing unit 203 associates a plurality of IDs for each of the parts with an image file. In the present embodiment, as described above, each part is configured as an SVG file. The ID providing unit 203 associates an ID with a path element for rendering each partial region, in an SVG file.

FIG. 4 shows an example of a plurality of IDs provided to each part. FIG. 4 shows IDs 402 for the head part 400, IDs 412 for the top part 410, and IDs 422 for the bottom part 420.

The head part 40 is provided with three IDs, namely "Hair", "Skin", and "Headphone" for the corresponding partial regions.

The top part 41 is provided with three IDs, namely "Skin", "Shirt", and "BarCodeReader" (barcode reader) for the corresponding partial regions.

The bottom part 42 is provided with three IDs, namely "Skirt", "Skin", and "Shoes" for the corresponding partial regions.

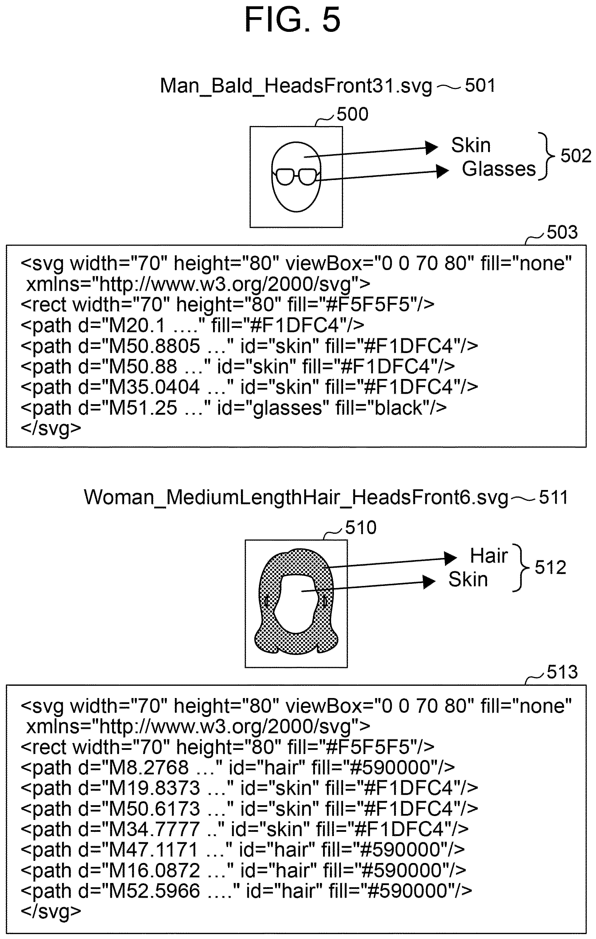

Furthermore, the ID providing unit 203 associates provided IDs with path elements in each SVG file. FIG. 5 shows an example of code in SVG files. FIG. 5 shows a file name 501, IDs 502, and an SVG file 503 for a head part 500, and a file name 511, IDs 512, and an SVG file 513 for a head part 510.

The head part 500 is provided with the file name 501, namely "Man_Bald_HeadsFront31" by the naming unit 202, and is provided with the two IDs 502, namely "Skin" and "Glasses" for the corresponding partial regions. In this case, the ID providing unit 203 associates the IDs with id attributes of path elements ("<path···/>") for rendering the corresponding partial regions, in an SVG file 503. Specifically, the ID providing unit 203 associates (writes) "skin" with (as) the id attributes of the path elements for rendering the partial regions provided with "Skin", and associates "glasses" with the id attributes of the path elements for rendering the partial regions provided with "Glasses", in the SVG file 503.

In addition, the head part 510 is provided with the file name 511, namely "Woman_MidumLengthHair_HeadsFront6" by the naming unit 202, and is provided with the two IDs 512, namely "Hair" and "Skin" for the corresponding partial regions. In this case, the ID providing unit 203 associates the IDs with id attributes of path elements for rendering the corresponding partial regions, in the SVG file 513. Specifically, the ID providing unit 203 associates (writes) "hair" with (as) the id attributes of the path elements for rendering the partial region provided with "Hair", and associates "skin" with the id attributes of the path elements for rendering the partial region provided with "Skin", in the SVG file 513.

In the svg element "<svg... >" of each SVG file, a width attribute and a height attribute set a display region, and a viewBox attribute sets a rendering region. Also, in the rect element "<rect... >", a width attribute and a height attribute designate a rectangular region, and a fill attribute designates a color. In addition, in each path element, a d attribute designates a partial region, and a fill attribute designates a color. To designate a color using the fill attribute, it is possible to use hexadecimal color code that is based on a predetermined rule.

In addition, the ID providing unit 203 can designate one or more partial regions that occupy a large region as a dominant portion, among the plurality of partial regions included in each part. The ID providing unit 203 can designate, as a dominant portion, a portion obtained by combining a hair portion (excluding a bald head) of the head part and an upper attire portion of the top part, for example. When a dominant portion is designated, the ID providing unit 203 can associate information indicating the dominant portion with an id attribute of a path element for rendering each of the partial regions included in the dominant portion, in the SVG file.

By the naming unit 202 providing file names, the part management unit 201 can manage the acquired parts by classifying them into the group of head parts, the group of top parts, and the group of bottom parts. By referencing the character strings of the head class, the top part class, and the bottom part class, for example, the part management unit 201 can manage the parts by classifying them into the group of head parts, the group of top parts, and the group of bottom parts. When a file name is provided to each part by the naming unit 202 and IDs are provided by the ID providing unit 203, the part management unit 201 configures an SVG file of the part, and saves the SVG file in a group of parts 111.

The processing up to this point corresponds to pre-processing. When pre-processing ends and parts each provided with a file name and one or more IDs are stored in a group of parts 211, the image generation apparatus 10 enters a state where preparation for generating an image from text is complete.

After pre-processing is complete, the text information acquisition unit 204 acquires text (text information) input by the user 1. The text is text representing the features of an image desired by the user 1. The image generation apparatus 10 may acquire text through an input operation performed by the user 1, or may acquire text from the user equipment 11 operated by the user 1. Alternatively, the text information acquisition unit 204 may acquire text input from a predetermined external apparatus in accordance with an instruction from the user 1. The text information acquisition unit 204 outputs the acquired text to the metadata derivation unit 206.

The prompt acquisition unit 205 acquires a prompt. The prompt is an instruction instructing the language model 212 to output metadata that semantically matches (is consistent with) the text, on a predetermined condition. The prompt acquisition unit 205 outputs the acquired prompt to the metadata derivation unit 206. The prompt acquisition unit 205 may acquire a prompt through an input operation performed by the user 1, or may acquire a prompt generated by and stored in the image generation apparatus 10 or an external apparatus in advance. The language model 212 is an LLM configured to infer metadata that semantically matches the description of input text, and output (derive) metadata in accordance with instructions of a prompt.

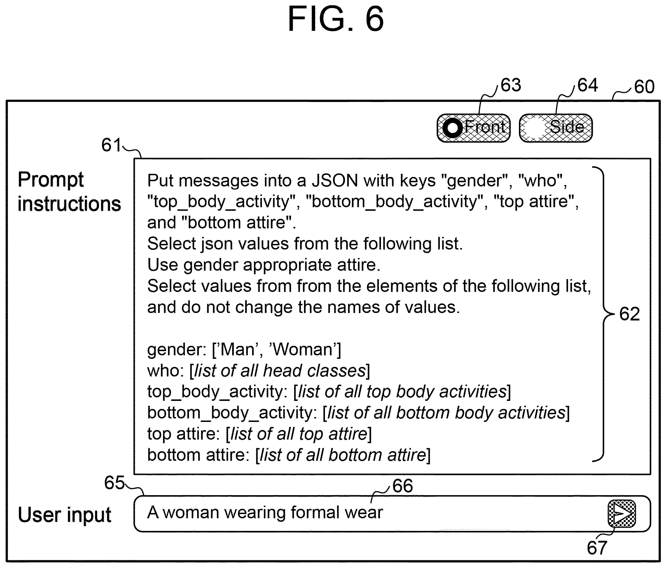

The metadata derivation unit 206 can display the acquired prompt and text on the display unit of the image generation apparatus 10. FIG. 6 shows an example of a screen 60 that includes a prompt and text displayed on the display unit of the image generation apparatus 10. On the screen 60, a prompt 62 acquired by the prompt acquisition unit 205 is displayed in a prompt box 61, and text 66 input by the user 1 is displayed in a text box 65. The content of the prompt box 61 and the text box 65 on the screen 60 can be edited by the user 1.

The description in the prompt 62 will be described. In the present embodiment, metadata derived by the metadata derivation unit 206 is metadata written in the JSON format. Metadata in the JSON format consists of a pair of a key (also referred to as an "attribute") and an attribute value (json value) for the key. The key is a character string, and the value can have the form of one of a character string, a numerical value, a Boolean value (true or false), an array, an object, and null. In the present embodiment, the prompt 62 includes an instruction to select a value that semantically matches the input text, from a plurality of selectable attribute values, for a plurality of keys.

In the example of FIG. 6, the prompt 62 is a command statement for selecting an attribute value that semantically matches the text, for each of the set keys, and generating metadata in the JSON format. The prompt 62 instructs the user to set a message in the JSON format that has six keys, that is to say "gender", "who (type of head)", "top_body_activity (activity of upper body)", "bottom_body_activity (activity of lower body)", "top attire", and "bottom attire". In addition, the prompt 62 includes instructions to select attribute values from a list at the bottom of the prompt 62, to select gender-appropriate attire, to select values from the elements of the list, and not to change the name of the value.

Lists from which data can be selected for the six keys are written in the prompt 62. As attribute values of the key "gender", elements "Man" and "Woman" are set. On the other hand, character strings included in the head class, the upper body activity class, the upper attire class, the lower body activity class, and the lower attire class are set as attribute values of the keys "who", "top_body_activity", "bottom_body_activity", "top attire", and "bottom attire", respectively. There are a large number of character strings included in the head class, the upper body activity class, the upper attire class, the lower body activity class, and the lower attire class, and thus the detailed illustration of element lists of these attribute values is omitted in FIG. 6.

As described above, the head part, the top part, and the bottom part represent a state of facing forward or sideways, and the user 1 can select a front (face forward) button 63 or a side (face sideways) button 64 on the screen 60. The front button 63 has been selected on the screen 60. A condition can be added such that the metadata derivation unit 206 selects an attribute value provided with "Front", for metadata to be derived, when the front button 63 is selected. In addition, a condition can be added such that the metadata derivation unit 206 selects an attribute value provided with "Side", for metadata to be derived, when the side button 64 is selected.

Note that six keys are designated in the prompt 62 in FIG. 6, but the number of keys is not limited to a specific number. On the screen 60, a condition is set such that an attribute value provided with "Front" or "Side" is selected for metadata to be derived, when the front button 63 or the side button 64 is selected, for example, but a key (e.g., a key "Facing") may be set that makes it possible to select "face forward" or "face sideways" as an attribute value.

In addition, the text 66 is text information expressing an image desired by the user 1, and "a woman wearing formal wear" has been input as an example. The text 66 shown in FIG. 6 designates a gender, but there is no particular rule for text that is input, and text that is input may be any text (descriptive information) that expresses (describes) a desired image (in the present embodiment, an image of a person). In addition, the text may include indirect expression or figurative expression for at least a portion of the image, such as "something similar to".

When an execute button 67 on the screen 60 is activated (selected) by the user 1 after the prompt 62 and the text 66 have been input, the metadata derivation unit 206 inputs the prompt 62 and the text 66 to the language model 212. A trigger for the metadata derivation unit 206 to input the prompt 62 and the text 66 to the language model 212 and derive metadata is not limited to activation of the execute button 67, and metadata may be automatically derived when input of the prompt 62 and the text 66 is complete.

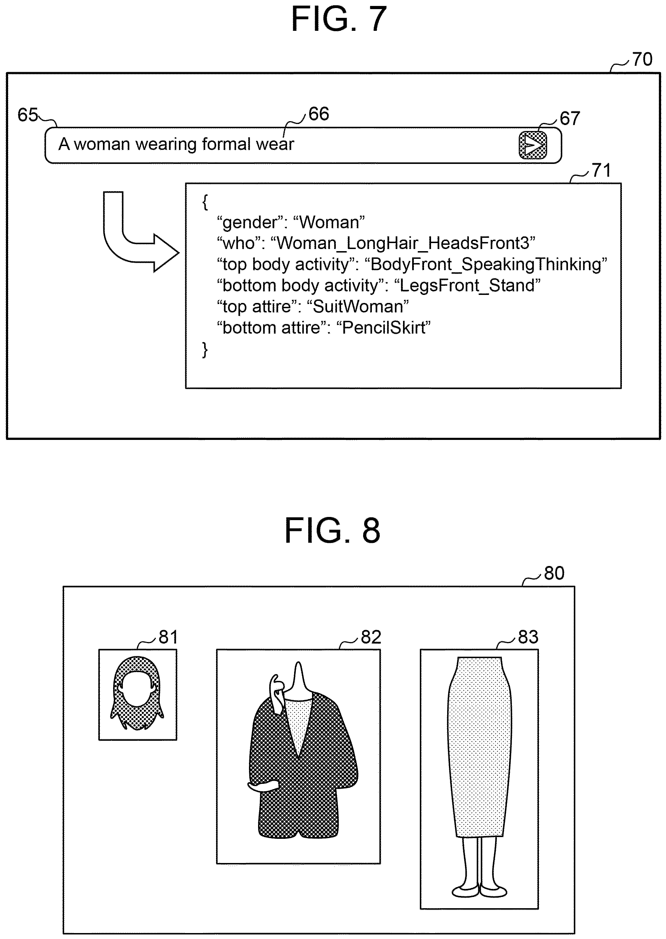

The metadata derivation unit 206 inputs the prompt 62 and the text 66 to the language model 212, infers metadata in the JSON format based on the prompt 62, and thereby derives (acquires) the metadata. That is to say, the metadata derivation unit 206 causes the language model 212 to execute metadata derivation processing (inference processing) based on the prompt 62 and the text 66. FIG. 7 shows an example of a screen 70 that includes metadata 71 derived based on the input prompt 62 and text 66. The prompt 62 is omitted from the screen 70. In the metadata 71, attribute values selected for the six keys "gender", "who", "top_body_activity", "bottom_body_activity", "top attire", and "bottom attire" set in the prompt 62 shown in FIG. 6 are written.

Specifically, in the metadata 71, attribute values "Woman", "Woman_LongHair_ HeadsFront3", "BodyFront_SpeakingThinking", "LegsFront_Stand", "SuitWoman", and "PencilSkirt" are respectively selected for the six keys "gender", "who", "top_body_activity", "bottom_body_activity", "top attire", and "bottom attire". On the screen 60 shown in FIG. 6, as a result of the front button 63 being selected, "Woman_LongHair_ HeadsFront3", "BodyFront_SpeakingThinking", and "LegsFront_Stand" that are attribute values that include "Stand" are selected.

The derived metadata 71 may be edited by the user 1. The attribute values included in the metadata 71 can be modified, for example. When the execute button 67 is activated again by the user 1 after the metadata derivation unit 206 has acquired the metadata 71, the metadata derivation unit 206 may cause the language model 212 to execute processing for deriving metadata based on the same input data so as to acquire metadata that includes attribute values at least a portion of which is different from those of the metadata 71. This can be realized, for example, by the metadata derivation unit 206 changing any parameter of the language model 212 every time the execute button 67 is activated. In addition, a configuration may be adopted in which, when the execute button 67 is activated by the user 1, a plurality of sets of metadata are derived by the metadata derivation unit 206 changing any parameter of the language model 212 at an appropriate time, for example.

The metadata derivation unit 206 outputs the derived metadata to the image generation unit 207.

The image generation unit 207 selects (samples) three parts from the group of parts 211 based on the metadata derived by the metadata derivation unit 206, and combines the three parts to generate one piece of image content. Note that, when a plurality of sets of metadata are derived, the image generation unit 207 may generate at least pieces of image content that respectively correspond to the sets of metadata, based on the sets of metadata.

FIG. 8 illustratively shows three parts 80 selected based on the metadata 71 shown in FIG. 7. The image generation unit 207 refers to the file names of the group of parts 211 stored in pre-processing, for the six attribute values included in the metadata 71, and selects SVG files each having a file name that includes character strings that match or are similar to the six attribute values (character strings of the attribute values). In the present embodiment, the image generation unit 207 selects three types of parts, namely a head part 81, a top part 82, and a bottom part 83. The head part 81, the top part 82, and the bottom part 83 each have a file name (not illustrated) having character strings that match or are similar to the character strings of the six attribute values included in the metadata 71, and are parts that semantically match (are consistent with) the text 66 ("woman in a formal dress").

The image generation unit 207 combines the three selected parts to generate one image. The procedure for combining parts will be described with reference to FIG. 9. FIG. 9 is a diagram for explaining an example of a part combining procedure. To facilitate description, an X axis and a Y axis perpendicular to each other are set as illustrated. In each of the head part 81, the top part 82, and the bottom part 83, the lower left vertex (corner) of the square is set as the origin. When the head part 81, the top part 82, and the bottom part 83 selected by the image generation unit 207 are combined, a horizontal line (a line having the same Y coordinate) set in advance for each of the parts is used. A first line 91 is set along the border between the face and the neck (that is to say, the line of the jaw), in the head part 81. A second line 92 to be overlapped with the first line 91 in the head part 81 is set in the top part 82. In addition, in the top part 82, a third line 93 is set at the hem line of the upper attire. A fourth line 94 to overlap the third line 93 in the top part 82 is set for the bottom part 83.

The image generation unit 207 centers the head part 81, the top part 82, and the bottom part 83. The image generation unit 207 then sends the bottom part 83 to the back and locates the bottom part 83 such that the fourth line 94 of the bottom part 83 and the third line 93 of the top part 82 overlap. Furthermore, the image generation unit 207 locates the head part 81 such that the second line 92 of the top part 82 and the first line 91 of the head part 81 overlap. Accordingly, an image 95 in which the head part 81, the top part 82, and the bottom part 83 are combined is generated.

In the example in FIG. 9, the image 95 is generated by superimposing the bottom part 83, the top part 82, and the head part 81 in this order, but the image generation unit 207 may superimpose two parts such that at least a portion of one of the parts overlaps the other part. If the top part includes a pose of folding hands in front of the lower attire such that the hands overlap the lower attire, for example, the image generation unit 207 can superimpose the top part and the bottom part such that the hand portion appears in front of the top part. In this case, a partial region of the top part that is to appear in front of the bottom part may be set in advance in the parts such that the partial region appears in front of the bottom part when the top part is superimposed on the bottom part. In addition, the procedure for combining the three parts is not limited to the procedure described with reference to FIG. 9, and the image generation unit 207 may be configured to combine the three parts using coordinates or parameters set in any suitable manner.

The image generated by the image generation unit 207 is output by the output control unit 208. The output control unit 208 may display the generated image on the display unit of the image generation apparatus 10 or may transmit the generated image to the user equipment 11 via the communication unit, for example. In addition, the output control unit 208 may store the generated image in the group of image content 213 in association with the text acquired by the text information acquisition unit 204. The image generation unit 207 may store the text 66 in FIG. 6 in the group of image content 213 in association with the image 95 in FIG. 9, for example. When the text information acquisition unit 204 acquires the text 66 after the image 95 has been generated, the output control unit 208 can take out and output the image 95. Accordingly, the output control unit 208 can output the image 95 again from the same text 66 without the metadata derivation unit 206 deriving metadata and the image generation unit 207 selecting and combining parts.

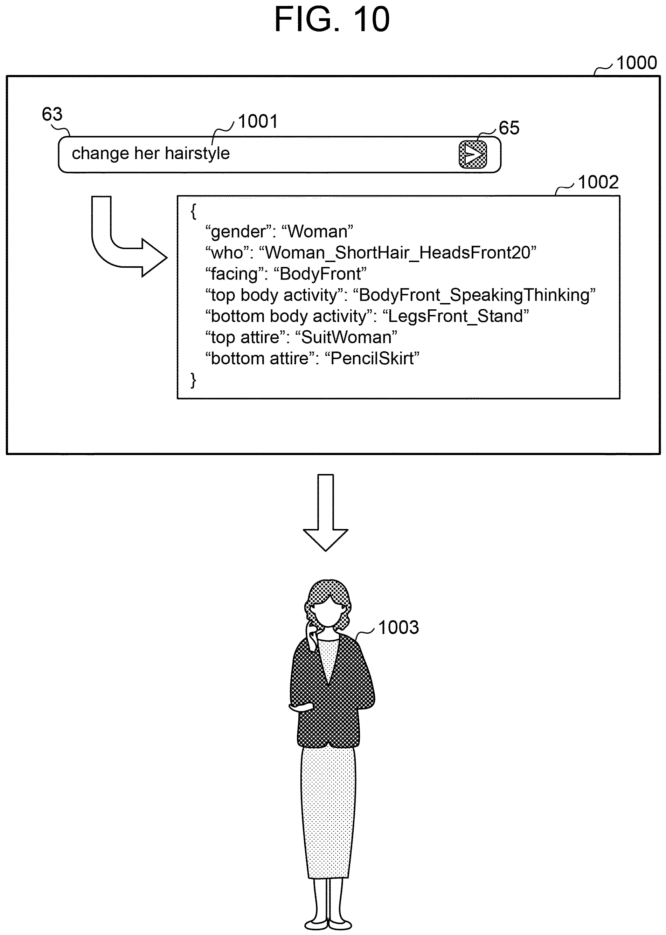

An image generated by the image generation unit 207 may be modified through additional text input by the user. FIG. 10 shows an example of a screen 1000 in the case of modifying a generated image. When the user 1 inputs text 1001 "change her hair style" to the text box 65 and activates the execute button 67 after the image 95 shown in FIG. 9 has been generated, the metadata derivation unit 206 derives metadata 1002 obtained by modifying the attribute value of the key "Who", in metadata 71. In the metadata 1002, the attribute value of the key "who" is changed from "Woman_LongHair_HeadsFront3" to "Woman_LongHair_HeadsFront20" compared with the metadata 71. The image generation unit 207 generates an image 1003 based on the metadata 1002. In the image 1003, the hair style has been changed compared with the image 95 shown in FIG. 9.

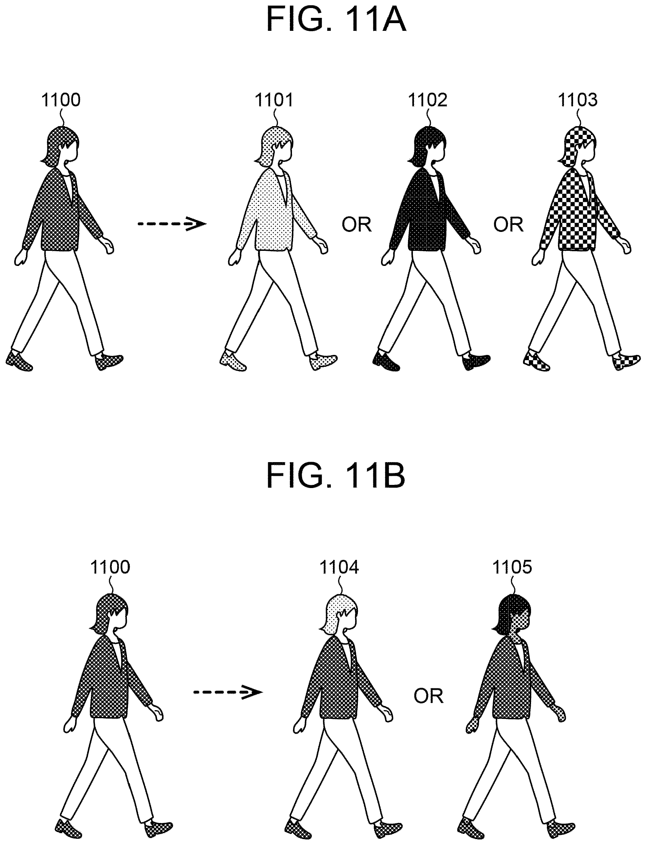

In addition, it is possible to change the color (or filling) of at least one partial region out of a plurality of partial regions in an image generated by the image generation unit 207. Changing the color of a partial region of an image will be described with reference to FIGS. 11A and 11B.

FIG. 11A is a conceptual diagram of an image in which colors of dominant portions in a generated image set by the ID providing unit 203 are changed. In this example, the dominant portions are a hair portion in the head part and the upper attire portion in the top part. An image 1100 is an image generated by the image generation unit 207. Upon receiving, from the user 1, an instruction that includes designation of a dominant portion and designation of a predetermined color, the image generation unit 207 changes the color of the dominant portion to the designated color. Images 1101, 1102, and 1103 make up a conceptual diagram of an image in which the colors of the hair portion and the upper attire portion, which are dominant portions, are changed from those of the image 1100.

FIG. 11B shows a conceptual diagram of a generated image in which the colors of one or more partial regions are changed. In this example, an image in which the colors of the skin and the hair are changed is illustrated. Upon receiving, from the user 1, an instruction that includes designation of a partial region and designation of a predetermined color, the image generation unit 207 changes the color of the designated partial region to the designated color. An image 1104 is a conceptual diagram of an image that is generated when an instruction to change the color of the hair portion is given, and in which the color of the hair portion has been changed from that of the image 1101. An image 1105 is a conceptual diagram of an image that is generated when an instruction to change the color of the skin portion is given, and in which the color of the skin portion has been changed from that of the image 1101.

Although an example has been described in which the color of at least a portion of a generated image is changed through an operation performed by the user 1, the image generation unit 207 may be configured to change a color according to a predetermined program.

As described above, the image generation apparatus 10 according to the present embodiment selects a plurality of parts that semantically match text expressing an image desired by the user 1, from the text, and generates one piece of image content by combining the selected parts. This makes it possible to generate image content that is semantically consistent with text, through a simple procedure for inputting the text.

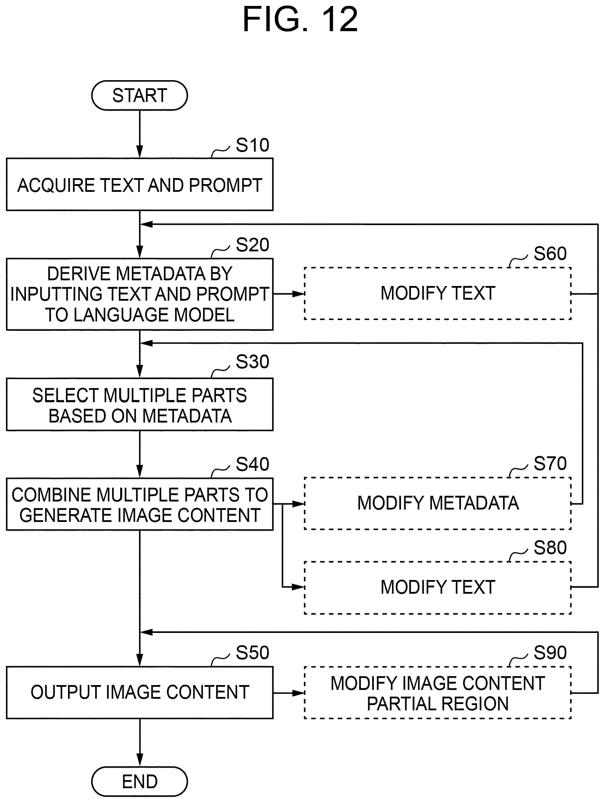

FIG. 12 shows a flow of processing that is executed by the image generation apparatus 10 according to the present embodiment. This processing is performed after the aforementioned pre-processing is complete. First, the text information acquisition unit 204 acquires text, and the prompt acquisition unit 205 acquires a prompt (S10). The metadata derivation unit 206 inputs the text and the prompt acquired in S10 to the language model 212, thereby inferring and deriving metadata that semantically matches the text (S20). Subsequently, the image generation unit 207 selects (samples) a plurality of parts based on the metadata derived in S20 (S30). In the present embodiment, the image generation unit 207 selects three parts, that is to say, a head part, a top part, and a bottom part, from the group of parts 211 based on the derived metadata. The image generation unit 207 then combines the selected parts to generate one piece of image content (S40). The output control unit 208 outputs the generated image content (S50).

As optional processing, the text information acquisition unit 204 may modify the text acquired in S10 through a user operation in order to modify the metadata derived in S20 (S60). Alternatively, the text information acquisition unit 204 may acquire, as modification text, text different from the text acquired in S 10, through a user operation. When the text is modified, the metadata derivation unit 206 derives metadata again based on the modified text and the prompt acquired in S10 (S20). In addition, after the image content is generated (S40), the text information acquisition unit 204 may modify the text acquired in S10 through a user operation (S80).

In addition, the metadata derivation unit 206 may modify the metadata derived in S20 through a user operation (S70). When the metadata is modified, the image generation unit 207 selects three parts, namely, a head part, a top part, and a bottom part from the group of parts 211 based on the modified metadata (S30), and combines the selected parts to generate one piece of image content (S40).

In addition, after the image content is output by the output control unit 208, the image generation unit 207 may change a partial region of the image content through a user operation (S90). As described with reference to FIGS. 11A and 11B, for example, the image generation unit 207 can change the color of a dominant portion and the colors of one or more partial regions through a user operation. In this case, the output control unit 208 outputs changed image content (S50).

In addition, in S20, for example, the metadata derivation unit 206 may derive a plurality of sets of metadata by changing any parameter of the language model 212 at an appropriate time. In this case, the image generation unit 207 may generate at least pieces of image content that respectively correspond to the sets of metadata, based on the sets of metadata (S30 and S40).

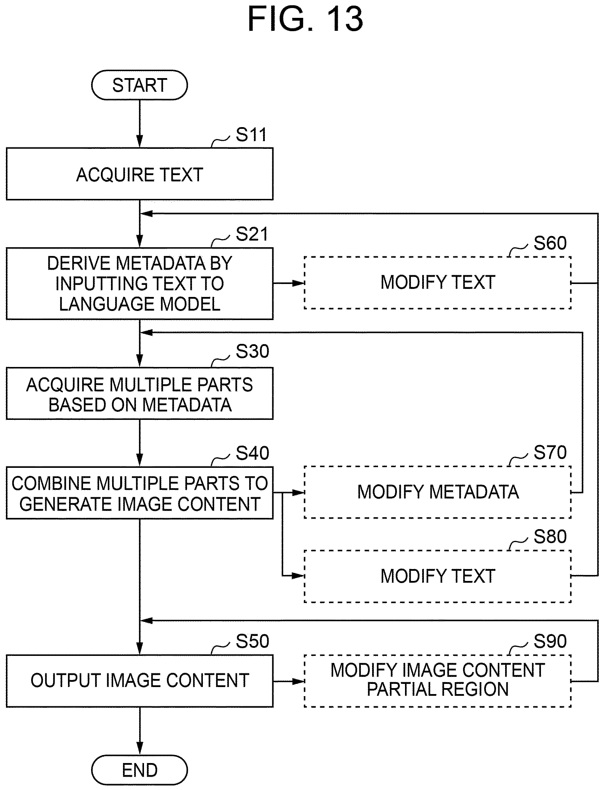

In the present embodiment, a prompt needs to be input to the language model 212, but, in a case where the language model 212 is configured, in advance, to operate in accordance with an instruction indicated by the prompt 62 in FIG. 6, only text information needs to be input. FIG. 13 shows a flow of processing according to a modified example of the present embodiment. In FIG. 13, the processing of S10 and S20 in FIG. 12 is changed to S11 and S21. In S11, the text information acquisition unit 204 acquires text from the user. In S21, the metadata derivation unit 206 derives metadata by inputting the text acquired in S 11 to the language model 212. The subsequent processing is similar to that in FIG. 12.

Although an object of the present embodiment is to generate an illustration of a person, the present embodiment can be applied to any image that can be generated by combining a plurality of parts. In addition, in the present embodiment, it is envisioned that the image file format of each part is SVG, but an image of another image file format such as JPEG (Joint Photographic Experts Group) or PNG (Portable Network Graphics) may also be used. In addition, in the present embodiment, it is envisioned that metadata is in the JSON format, but there is no limitation to a specific format as long as the metadata includes description equivalent to keys (attributes) and attribute values.

### Hardware Configuration of Image Generation Apparatus

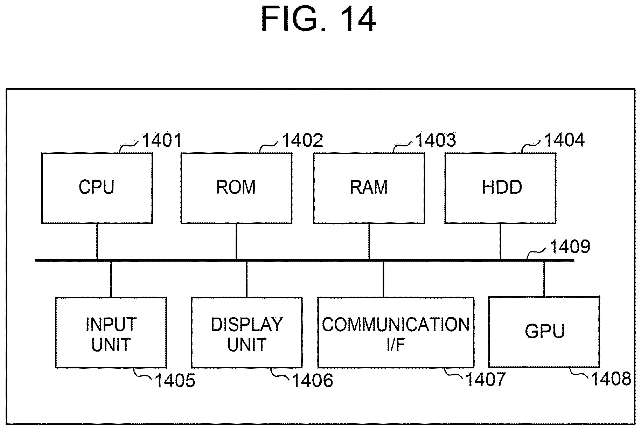

Next, an exemplary hardware configuration of the image generation apparatus 10 will be described. FIG. 14 is a block diagram showing an example of a hardware configuration of the image generation apparatus 10 according to the present embodiment.

The image generation apparatus 10 according to the present embodiment can be mounted in a single or a plurality of computers, mobile devices, or any other processing platforms.

Referring to FIG. 2, an example is shown in which the image generation apparatus 10 is mounted in a single computer, but the image generation apparatus 10 according to the present embodiment may be mounted in a computer system that includes a plurality of computers. The plurality of computers may be communicatively connected via a wired or wireless network.

As shown in FIG. 14, the image generation apparatus 10 may include a CPU (Central Processing Unit) 1401, a ROM (Read Only Memory) 1402, a RAM (Random Access Memory) 1403, an HDD (Hard Disk Drive) 1404, an input unit 1405, a display unit 1406, a communication I/F (communication unit) (interface) 1407, a GPU (Graphics Processing Unit) 1408, and a system bus 1409. The image generation apparatus 10 may also include an external memory.

The CPU 1401 performs overall control of operations of the image generation apparatus 10, and controls the components (1402 to 1408) via the system bus 1409, which is a data transmission path.

The ROM 1402 is a nonvolatile memory that stores a control program and the like necessary for the CPU 1401 to execute processing. The program includes instructions (code) for executing the above processing according to the embodiment. Note that the program may be stored in a nonvolatile memory such as the HDD 1404 or an SSD (Solid State Drive), or an external memory such as a removable storage medium (not illustrated).

The RAM 1403 is a volatile memory, and functions as a main memory, a work area, and the like of the CPU 1401. That is, when executing processing, the CPU 1401 realizes various functional operations by loading a necessary program or the like from the ROM 1402 to the RAM 1403, and executing the program or the like. The RAM 1403 may include a data storage unit 210 shown in FIG. 2.

The HDD 1404 stores, for example, various types of data, information, and the like required when the CPU 1401 performs processing using a program. In addition, the HDD 1404 stores, for example, various types of data, information, and the like obtained by the CPU 1401 performing processing using a program or the like.

The input unit 1405 is constituted by a keyboard and a pointing device such as a mouse. The display unit 1406 is constituted by a monitor such as a liquid crystal display (LCD). The display unit 1406 may function as a GUI (Graphical User Interface) in combination with the input unit 1405. The above input operations performed by the user can be performed via the input unit 1405 or the GUI.

The communication I/F 1407 is an interface for controlling communication between the image generation apparatus 10 and an external apparatus.

The communication I/F 1407 provides an interface to a network, and executes communication with an external device via the network. Various types of data, various parameters, and the like are transmitted and received to and from the external device via the communication I/F 1407. In the present embodiment, the communication I/F 1407 may execute communication via a wired LAN (Local Area Network) or a dedicated line conforming to a communication standard such as Ethernet (registered trademark). Note that the network that can be used in the present embodiment is not limited thereto, and may be configured as a wireless network. Examples of the wireless network include wireless personal area networks (PANs) such as Bluetooth (registered trademark), ZigBee (registered trademark), and UWB (Ultra Wide Band). Examples of the wireless network also include a wireless LAN (Local Area Network) such as Wi-Fi (Wireless Fidelity) (registered trademark) and wireless MANs (Metropolitan Area Networks) such as WiMAX (registered trademark). Examples of the wireless network further include wireless WANs (Wide Area Networks) such as 4G and 5G. Note that the network may be any network that connects devices to each other to enable communication therebetween, and the standard, scale, and configuration of communication are not limited to those described above.

The GPU 1408 is a processor specialized in image processing. The GPU 1408 can cooperate with the CPU 1401 to perform predetermined processing.

At least some of the functions of the constituent elements of the image generation apparatus 10 shown in FIG. 2 can be realized by the CPU 1401 executing a program. Note that at least some of the functions of the constituent elements of the image generation apparatus 10 shown in FIG. 2 may be operations of dedicated hardware. In this case, the dedicated hardware operates under the control of the CPU 1401.

The disclosure includes the following embodiments.
[1] An image generation apparatus comprising: an acquisition unit configured to acquire text information and a prompt, the prompt being an instruction to output metadata that includes a plurality of attribute values composed of attribute values that respectively correspond to a plurality of attributes and semantically match the text information; a derivation unit configured to derive metadata corresponding to the text information by inputting the text information and the prompt to a language model; and a generation unit configured to generate an image based on the derived metadata.
[2] The image generation apparatus according to [1], further comprising a storage unit configured to store a plurality of image parts, wherein the generation unit selects a predetermined number of image parts from the storage unit based on the plurality of attribute values included in the derived metadata, and generates the image by combining the predetermined number of image parts.
[3] The image generation apparatus according to [2], wherein the plurality of image parts stored in the storage unit are each provided with a name composed of one or more character strings that express the image part, and the generation unit selects the predetermined number of image parts that include character strings that match or are similar to the plurality of attribute values included in the derived metadata, and generates the image by combining the predetermined number of image parts.
[4] The image generation apparatus according to [2] or [3], further comprising a change unit configured to change at least a portion of the image, wherein each of the plurality of image parts stored in the storage unit is composed of a plurality of sub-parts, and each of the plurality of sub-parts is provided with an identifier for identifying the sub-part, and the change unit changes a color of a sub-part corresponding to an identifier designated by a user.
[5] The image generation apparatus according to any one of [1] to [4], wherein, when the metadata is modified by a user, the generation unit generates an image based on the modified metadata.
[6] The image generation apparatus according to any one of [1] to [5], wherein the metadata is metadata written in a JSON (JavaScript Object Notation) format.
[7] The image generation apparatus according to any one of [1] to [6], wherein the language model is an LLM (Large Language Model).

## Claims

1. An image generation apparatus comprising:
acquisition means (204; 205) for acquiring text information and a prompt, the prompt being an instruction to output metadata that includes a plurality of attribute values composed of attribute values that respectively correspond to a plurality of attributes and semantically match the text information;
derivation means (206) for deriving metadata corresponding to the text information by inputting the text information and the prompt to a language model; and
generation means (207) for generating an image based on the derived metadata.

2. The image generation apparatus according to claim 1, further comprising
storage means (210) for storing a plurality of image parts,
wherein the generation means (207) selects a predetermined number of image parts from the storage means (210) based on the plurality of attribute values included in the derived metadata, and generates the image by combining the predetermined number of image parts.

3. The image generation apparatus according to claim 2,
wherein the plurality of image parts stored in the storage means (210) are each provided with a name composed of one or more character strings that express the image part, and
the generation means (207) selects the predetermined number of image parts that include character strings that match or are similar to the plurality of attribute values included in the derived metadata, and generates the image by combining the predetermined number of image parts.

4. The image generation apparatus according to claim 2 or 3, further comprising
change means (207) for changing at least a portion of the image,
wherein each of the plurality of image parts stored in the storage means (210) is composed of a plurality of sub-parts, and each of the plurality of sub-parts is provided with an identifier for identifying the sub-part, and
the change means (207) changes a color of a sub-part corresponding to an identifier designated by a user.

5. The image generation apparatus according to any one of claims 1 to 4,
wherein, when the metadata is modified by a user, the generation means (207) generates an image based on the modified metadata.

6. The image generation apparatus according to any one of claims 1 to 5,
wherein the metadata is metadata written in a JSON (JavaScript Object Notation) format.

7. The image generation apparatus according to any one of claims 1 to 6,
wherein the language model is an LLM (Large Language Model).

8. An image generation method comprising:
acquiring (S10) text information and a prompt, the prompt being an instruction to output metadata that includes a plurality of attribute values composed of attribute values that respectively correspond to a plurality of attributes and semantically match the text information;
deriving (S20) metadata corresponding to the text information by inputting the text information and the prompt to a language model; and
generating (S40) an image based on the derived metadata.

9. An image generation program for causing a computer to execute
an acquisition procedure (S10) for acquiring text information and a prompt, the prompt being an instruction to output metadata that includes a plurality of attribute values composed of attribute values that respectively correspond to a plurality of attributes and semantically match the text information;
a derivation procedure (S20) for deriving metadata corresponding to the text information by inputting the text information and the prompt to a language model; and
a generation procedure (S40) for generating an image based on the derived metadata.
